# EUROPÄISCHE PATENTANMELDUNG

(11) **EP 4 362 048 A1**
(43) Veröffentlichungstag der Anmeldung: **01.05.2024**
(21) Anmeldenummer: 22206022.0
(22) Anmeldetag: 08.11.2022
(51) Int. Cl.: H01B 3/40, C08L 63/00, C08L 79/08, C08L 83/10, H02K 3/30, H01B 3/30

(54) **FORMULIERUNG FÜR EIN ISOLATIONSSYSTEM, VERWENDUNG DAZU UND FORMKÖRPER**

(30) Priorität: 24.10.2022 DE 202022105997 U; 24.10.2022 EP 22203336
(71) Anmelder: Siemens Aktiengesellschaft, 80333 München (DE); Siemens Mobility GmbH, 81739 München (DE)
(72) Erfinder: LANG, Steffen, 91352 Hallerndorf (DE); MALEIKA, Marek, 90766 Fürth (DE); MÜLLER, Niels, 91166 Georgensgmünd (DE); SCHEMMEL, Florian, 90455 Nürnberg (DE)
(74) Vertreter: Siemens Patent Attorneys

(57) **Zusammenfassung**

Die Erfindung betrifft allgemein das Gebiet der Isolierung, insbesondere eine Formulierung für eine Hochtemperatur-Isolierung bei Betriebstemperaturen von 200°C und mehr. Die Isolierung dient als Isolation von elektrischen Leitern. So betrifft die Erfindung ein Isolationssystem für eine elektrische Maschine, insbesondere eine rotierende elektrische Maschine mit Stator, wie einen Elektromotor und/oder einen Generator mit verbesserter Temperaturbeständigkeit der polymeren Isolationssystems-Bestandteile und oder eine isolierende Beschichtung für generativ hergestellte Leiter oder Teilen davon, Stromschienen, Anschlussschienen und/oder Klemmkästen. Durch die vorliegende Erfindung wird erstmals ein Verguss, Pulverlack und/oder eine Formulierung für einen Nasslack offenbart, der als Füllstoff Hochleistungsthermoplaste umfasst, wobei sich gezeigt hat, dass diese Füllstoffe die thermische Beständigkeit deutlich erhöhen können und dabei noch verbesserte thermomechanische Eigenschaften in ein daraus hergestelltes Isolationssystem bringen.

## Beschreibung

Die Erfindung betrifft allgemein das Gebiet der Isolierung, insbesondere eine Formulierung für eine Hochtemperatur-Isolierung bei maximalen Betriebstemperaturen von bis zu 200°C und mehr. Die Formulierung dient in Form des durch Härtung daraus erhältlichen Formkörpers als Isolationssystem, als isolierende Beschichtung elektrischer Leiter und/oder jeweils als Teil davon. So betrifft die Erfindung auch einen Formkörper der zumindest Teil eines Isolationssystems für eine elektrische Maschine, insbesondere eine rotierende elektrische Maschine mit Stator, wie einen Elektromotor und/oder einen Generator, mit verbesserter Temperaturbeständigkeit der polymeren Isolationssystems-Bestandteile, ist. Ebenso betrifft die Erfindung einen Formkörper als Teil einer isolierenden Beschichtung oder im Ganzen eine isolierende Beschichtung bildend, insbesondere die isolierende Beschichtung von - beispielsweise - in einem additiven Verfahren hergestellten elektrischen Leiter, von Stromschienen, von Anschlussschienen und/oder der isolierenden Beschichtung von Klemmkästen.

Elektrische Maschinen für Antriebssysteme allgemein sind mit Stator, wie bei Motoren und Generatoren des Mittel- und Hochspannungsbereichs, ausgestattet und umfassen elektrische Leiter, Hauptisolation, Leiterisolierung, wie Drahtisolierung mit Teilleiterisolation und Ständerblechpaket. Die Hauptisolation dient dem Zweck, die Phasen gegeneinander, gegen das geerdete Ständerblechpaket und gegen die Umgebung elektrisch zu isolieren.

Die Leiterisolierung isoliert die Leiter der Spule gegeneinander. Die elektrischen Maschinen werden in der Regel bei höchstmöglichen Stromdichten betrieben. Traktionsmotoren werden bei hohen Temperaturen -z.B. Wärmeklasse der polymerbasierten Kunststoffe bis zu 220°C - betrieben. Die polymeren Kunststoffe, die deshalb für diesen Zweck in Frage kommen, sind auf wenige Polymersorten begrenzt.

Ein gewickeltes Isolationssystem umfasst andererseits neben Flächenisolationswerkstoffen und/oder Isolierbändern auch Tränkharz. Die Flächenisolationswerkstoffe - die beispielsweise die Nutauskleidung und/oder die Isolierbänder bildenbasieren neben Glimmer und Glas aufgrund unterschiedlichster Anforderungen bislang im Wesentlichen auf mAramid und/oder Polyimid. Als Tränkharz werden üblicherweise bei Traktionsmotoren wegen der hohen Wärmeklasse auf Grund der niedrigen Verarbeitungstemperatur Duromere mit Polyesterimid und/oder Silikon eingesetzt. Bei den industriellen Hochspannungsmotoren werden meist Epoxide eingesetzt.

Bei Isolationssystemen mit Glimmerbändern wird das Papier mit einem Glasgewebeträger und/oder einer PET und/oder PI - Folie verbunden und in schmale Rollen geschnitten, die dann die Isolierbänder bilden und - z.B. um den Leiter respektive die Spule - gewickelt werden.

Bei extrudierten Leiterisolationen und/oder bei umsponnenen, bandförmigen Leiterisolationen - weniger bei den Lösungsmittel-haltigen Drahtlacken - werden herkömmlich PEEK, PI, PAI, PPS, PEI, Polyesterimid (Duromer) und ähnliche Kunstharze eingesetzt. Vor allem sind duromere Drahtlacke für die Leiterisolation handelsüblich, die hinsichtlich der TE-Resistenz optimiert wurden.

Die "Hairpin-Technologie" ist eine Wickeltechnologie für Statoren in elektrischen Motoren und Generatoren, die eine Untergruppe der Wellenwicklungen darstellt. Sie findet insbesondere bei Traktionsmotoren für Elektrofahrzeuge Anwendung. In Abgrenzung zur Formspulenwicklungs-Technologie basiert die Wellenwicklungs-Technologie auf Drahtwindungen, welche einzeln und nicht als Spulen kombiniert in die Statornuten des Blechpakets eingefügt werden. Diese Steckspulen, so genannte Hairpins, gewellte Hairpins "Continuous Hairpin" und/oder I-Pins sind wellenförmig, **U-** respektive **I-**förmig gebogene lackierte und/oder extrudierte Kupferflachdrähte.

I-Pins sind beispielsweise geradlinig geformte Kupferflachdrähte, bei dem Konzept der Wellenwicklung "Continuous Hairpin" werden so genannte Wickelmatten hergestellt und anschließend von innen in das Blechpaket eingeführt. Im Vergleich zur **U-** und **I**-Pin-Technologie hat das einen deutlich geringeren Aufwand in der Verbindungstechnik der einzelnen Pins.

Der Aufbau eines Hairpin-Stators unterscheidet sich zu herkömmlichen Statoren lediglich in der Art des Wicklungssystems - die weiteren Komponenten des Stators bleiben weitestgehend unverändert. Die Windungen in Form von isoliertem Wickeldraht wird im Hairpin-Stator durch Steckspulen realisiert.

Bei der Hairpin-Technologie, die eine moderne Technologie für Statoren in elektrischen Maschinen darstellt, werden neue, kostengünstigere Methoden ausprobiert. So wird der Kupferflachdraht mit typischer Hairpin-Geometrie in einem umformbasierten Montageverfahren in die Nuten des Blechpakets eingebracht. Dabei ist es jedoch unerlässlich, die gelöteten oder geschweißten Verbindungsstellen der einzelnen Hairpins untereinander mit einer Beschichtung zu isolieren, da diese nicht durch die Leiterisolierung geschützt sind. Die derzeit verwendeten Lacke sind jedoch in ihrer thermischen Beständigkeit auf eine Wärmeklasse 180(H) begrenzt.

Zur Herstellung des fertigen Isolationssystems ist hierbei vorzugsweise noch eine Fixierung der Wicklung, des Drahts und/oder des Hairpins in der Nut durch Vergießen, Imprägnieren, Beträufeln, Tauchen und/oder durch Spritzguss mit einem Kunstharz vorgesehen. Andererseits kann ein durch Drahtextrusion isolierter Teilleiter durch Spritzguss in der Nut fixiert werden.

Es besteht nach wie vor der Bedarf an einer verbesserten Technologie für eine Formulierung zur Herstellung eines Isolationssystems und/oder einer isolierenden Beschichtung, insbesondere auch geeignet für die oben genannten Anwendungen - auch für den Einsatz in der Steckspulen- und/oder Wellenwicklungs-Technologie - beispielsweise einsetzbar z.B. bei Traktionsmotoren für Schienenfahrzeuge, Personenkraftwagen, Lastkraftwagen und/oder zur isolierenden Beschichtung, beispielsweise von Klemmkästen, additiv gefertigten Leitern und/oder Spulen, sowie Strom- oder Anschlussschienen.

Aufgabe der vorliegenden Erfindung ist daher, eine Formulierung für eine isolierende Beschichtung und/oder ein Isolationssystem für eine elektrische rotierende Maschine, insbesondere zum Einsatz bei maximalen Betriebstemperaturen von mehr als 170°C, insbesondere von 200°C und darüber, bevorzugt sogar von maximal 220°C und darüber, zu schaffen, das auch für den Einsatz bei der Steckspulen und/oder Wellenwicklungs-Technologie geeignet ist.

Diese Aufgabe wird durch den Gegenstand der vorliegenden Erfindung, wie er in den Ansprüchen, der Beschreibung und den Beispielen offenbart ist, gelöst.

Gegenstand der Erfindung ist daher eine Formulierung für ein Isolationssystem und/oder eine isolierende Beschichtung, als Verguss, Pulverlack und/oder Lösungsmittel-haltig als Nasslack vorliegend, zumindest eine Komponente **B** umfassend, wobei auch eine Komponente **A,** ein unvernetzt vorliegendes, flüssiges oder festes Basisharz mit zur Härtung erforderlichem Härter und/oder Beschleuniger vorzugsweise enthalten ist und

Komponente **B** als PFT, also in Form eines bei Raumtemperatur unter Normalbedingungen festen polymeren Füllstoffes mit hohem relativen Temperaturindex, insbesondere größer 160°C, vorliegt, wobei
Komponente **A** im Bereich von 0% bis 99% Masseanteile und Komponente **B** im Bereich von 1% bis 100% Masseanteile, bezogen auf 100% der Lösungsmittelfreien Formulierung, vorliegt.

Außerdem ist Gegenstand der vorliegenden Erfindung ein Formkörper, erhältlich durch Härtung der oben beschriebenen Formulierung, wobei der Formkörper ein Isolationssystem oder Teile eines Isolationssystems und/oder eine elektrisch isolierende Beschichtung oder Teile einer elektrisch isolierenden Beschichtung bildet.

Schließlich ist Gegenstand der Erfindung die Verwendung einer Formulierung, wie oben beschrieben, zur Herstellung eines Isolationssystems, einer isolierenden Beschichtung und/oder einer Leiterisolierung durch Pulverbeschichtung, Wirbelbettbeschichtung, Nasslackierung und/oder Verguss.

Als "relativer Temperaturindex" ist hier der relative Temperaturindex nach IEC 60216 respektive DIN EN 60216 "TI" gemeint. Dies entspricht dem Zahlenwert der Temperatur in °C, die aus der thermischen Langzeitbeziehung für eine Zeit von 20 000 Stunden bei 5% Masseverlust abgeleitet wird.

Eine Formulierung gemäß der Erfindung bildet nach erfolgter Härtung ein Isolationssystem in Form einer Leiterisolierung und/oder Teile einer Leiterisolierung. Die Verarbeitung der Formulierung erfolgt beispielsweise, aber nicht abschließend, mittels Pulverlack-, Verguss-, Wirbelbett- und/oder Nasslackbeschichtung von Leitern, Teilen von Leitern und/oder Gehäusen dazu. Die Härtung zum Formkörper erfolgt bevorzugt thermisch und/oder über Strahlung, insbesondere UV-Härtung.

Ein Formkörper aus der Formulierung kann dann -z.B. - teilweise oder ganz die Isolation von einem oder mehreren Einzelstäben, vom Wickelkopf und/oder auch vom Schaltbereich eines Wickelkopfs und/oder sogar die Isolation einer gesamten Drahtwicklung bilden. Er kann des Weiteren als TeilleiterIsolation und/oder als Einzelstab-Isolation einer Steckspule, eines sonstigen Leiterelements in Wellenwicklungs-Technologie und/oder als isolierende Beschichtung eines generativ, insbesondere additiv, gefertigten Leiterelements fungieren.

Schließich kann die Formulierung ganz oder teilweise eine isolierende Beschichtung von Strom- und/oder Anschlussschienen und/oder Klemmkästen darstellen.

Leiterisolierung ist beispielsweise die elektrische Isolation der einzelnen Leiterwindungen einer Spule gegeneinander und/oder der Leiter einer Drahtwicklung und/oder gegen die Umgebung und/oder gegen Masse, z.B. der elektrischen Maschine.

Unter Wirbelbettbeschichtung ist die Beschichtung eines Leiters im Wirbelbett, das mit Pulverlackformulierung gefüllt ist, zu verstehen. Dabei wird insbesondere ein Pulver aus - unter Normalbedingungen festen - Verbindungen eingesetzt, das heißt bevorzugt wird dabei, neben dem sowieso fest vorliegenden Thermoplasten in Partikelform, auch das Basisharz fest vorliegen.

Pulverbeschichtung, insbesondere elektrostatische Pulverbeschichtung - erfolgt z.B. durch Sprühen und/oder im Wirbelbettverfahren. Dabei wird ein Pulver aus Feststoffen eingesetzt, das heißt neben dem sowieso fest vorliegenden Thermoplasten in Partikelform, liegt auch das Basisharz als Feststoff vor.

Nasslackierung erfolgt z.B. durch Lackieren, Bepinseln, Tauchen, Besprühen, Spin Coating und/oder Tauchverfahren. Die Formulierung wird dabei in einem Lösungsmittel gelöst auf den Leiter aufgebracht, das Lösungsmittel wird dann - zumindest zum Teil - entfernt und die Formulierung gehärtet. Dazu kann das Basisharz als Feststoff und/oder als Flüssigkeit vorliegen.

Verguss erfolgt mit flüssiger Formulierung ohne Lösungsmittel, wobei das Basisharz, im Gegensatz zur Formulierung, die als Pulverlack eingesetzt wird, unter Normalbedingungen als Flüssigkeit vorliegt.

Als "Normalbedingungen" - insbesondere hinsichtlich Verarbeitungsbedingungen und Lagerstabilität ein relevanter Gesichtspunkt - werden 25 °C Raumtemperatur, Umgebungsluft und Normaldruck bezeichnet.

Allgemeine Erkenntnis der Erfindung ist es, dass in einer Formulierung für einen Verguss, als Wirbelbettpulver, als Pulverlack und/oder für einen Nasslack zur Herstellung eines elektrischen Isolationssystems und/oder einer isolierenden Beschichtung die Einarbeitung von fest und polymer vorliegende Kunststoff-Füllstoffpartikeln mit hohem relativen Temperaturindex, **P**olymerer **F**üllstoff mit hohem relativen **T**emperaturindex "PFT" Vorteile hinsichtlich thermomechanischer Stabilität und insbesondere hinsichtlich Temperaturstabilität bringt.

Dies ist insbesondere bei erhöhten Leistungsdichten der elektrischen Leiter von Vorteil, weil die Erhöhung der Leistungsdichte immer auch eine Erhöhung der Betriebstemperaturen mit sich bringt.

Die PFTs gemäß der Erfindung haben einen hohen Temperaturindex "TI", der insbesondere über 160°C, bevorzugt über 170°C, besonders bevorzugt über 180°C und ganz besonders bevorzugt über 190°C liegt. Es werden PFTs bevorzugt mit hoher Glasübergangs-Temperatur eingesetzt. Insbesondere ist das bei thermoplastischen, elastomeren und/oder duroplastischen Partikeln mit einer Glasübergangstemperatur größer gleich 130°C, bevorzugt größer gleich 150°C, bevorzugt in Mischung mit Komponente **A,** mit einem noch unvernetzt vorliegenden Basisharz, Härter und/oder Beschleuniger, der Fall, dort werden bei Vorhandensein von PFTs klare mechanische und/oder thermomechanische Vorteile und/oder eine deutliche Erhöhung der Temperaturbeständigkeit des resultierenden Isolationssystems und/oder der isolierenden Beschichtung erzielt.

Die thermoplastischen, elastomeren und/oder duromeren PFTs der Komponente **B** sind - beispielsweise hinsichtlich Material, Oberflächenbehandlung, Oberflächenbeschichtung, Kristallinität, Amorphizität, Korngröße, Partikel-Form und/oder Faserverstärkung gleich oder verschieden. Die PFTs liegen vorzugsweise deagglomeriert vor.

Komponente **B** enthält die PFTs und liegt in der trockenen Formulierung massenmäßig bezogen auf 100 Masseanteile Lösungsmittel-freier Formulierung im Bereich von 1% bis 99% Masseanteile, insbesondere von 10% bis 60% und ganz besonders bevorzugt von 20% bis 50% und besonders bevorzugt im Bereich von 20 % bis 30% Masseanteile bezogen auf 100 Masseteile Lösungsmittel-freier Formulierung, vor.

Das "Basisharz" mit ggf. Härter, Beschleuniger, Additiven, Zusatzstoffen, weiteren Füllstoffen, bildet dann den Rest zur 100 % Masseteile der Lösungsmittelfreien Formulierung.

Der Begriff "Basisharz" im Sinne von "Hauptbestandteil der Formulierung" trifft gemäß dieser Erfindung nicht mehr zu, weil das Harz unter Umständen, wenn Komponente **B** größer 50 % Masseanteile der Formulierung stellt, nur noch als Bindemittel oder eben - beispielsweise bei einer Pulverlackformulierung - gar nicht mehr eingesetzt wird.

Nach einer vorteilhaften Ausführungsform der Erfindung liegt in der Formulierung als Komponente **A** das Basisharz in Form eines noch nicht vernetzten duromeren Harzes vor, das eine oder mehrere Verbindungen, ausgewählt aus der Gruppe Epoxidharz, Polyurethanharz, Polyisocyanatharz, Polyimidharz, Polyesterimidharz und/oder Polyesterharz in beliebigen Mischungen, Blends und/oder Copolymeren umfasst. Beispielsweise umfasst das duromere unvernetzte Kunstharz in der Formulierung Verbindungen wie Bisphenol-A-diglydidylether, Bisphenol-F-diglycidylether, Novolak, aliphatischem Epoxidharz und/oder aromatischem Epoxidharz. Bei der lösungsmittelfreier Verwendung als Verguss und/oder als Lösungsmittel-haltig als Nasslack kann das Basisharz auch unter Normalbedingung flüssig vorliegen, beim Einsatz als Pulverlack ist es ein Pulver, also ein Feststoff.

Dazu ist in der Komponente **A** korrespondierend, also in stöchiometrisch geeigneter Menge und chemisch passend zum Basisharz ein Härter enthalten, der beispielsweise auf Anhydrid-, Imidazolbasis, Bisphenol und/oder Dicyanamidbasis aufgebaut ist.

Zur Initiierung der Härtung nach erfolgter Applikation -z.B. Aufsprühen des Pulverlacks - der Formulierung auf dem zu isolierenden Körper, beispielsweise einer Steckspule bei der Hairpin-Technologie, kann in der Komponente **A** noch ein Beschleuniger in geringer Menge, z.B. im Bereich von 0,3 bis 2 % Masseanteile, enthalten sein. Beschleuniger für diese Anwendung sind dem Fachmann bekannt, beispielsweise kann Harnstoff wie Dimethylharnstoff, 1,1-Dimethyl-3-phenylurea, Toluyl-bis-1.1-dimethyl-harnstoff, 3-(3-Trifluormethylphenyl)-1,1-dimethylharnstoff, 2-Phenylimidazol und/oder Benzyldimethylamin als Beschleuniger eingesetzt werden.

Pulverlack kann insbesondere vorteilhaft auch bei der Einzelstabisolierung der Hairpin-, Wellenwicklung- und/oder Steckspulen-Technologie eingesetzt werden. Dabei können - beispielsweise automatisiert - Einzelstäbe mit Pulverlack, z.B. im Fließbandverfahren, beschichtet oder besprüht werden, die dann einer thermischen und/oder UV-Härtung unterzogen werden.

Als Nasslack liegt die Formulierung gelöst in Lösungsmittel vor. Als Lösungsmittel sind beispielsweise geeignet: Aceton, Isopropanol, Ethylester, Methylethylketon, Butylacetat in beliebigen Mischungen und/oder Kombinationen. Dem Nasslack ist weiterhin eventuell ein gängiges Thixotropiermittel beigemischt.

Nach einer weiteren vorteilhaften Ausführungsform liegen die PFTs der Komponente **B** in Korngrößen im Bereich von 1nm bis 3mm, bevorzugt von 0,1µm bis 1000µm, vor. Die PFTs in Komponente **B** können hinsichtlich ihrer Korngröße und Partikelform gleich oder verschieden sein. Insbesondere können auch verschiedene Duroplasten und/oder Thermoplasten und/oder verschiedene Korngrößen eines Kunststoffes gemischt vorliegen.

Insbesondere vorteilhaft hat sich die Einarbeitung zumindest einer Partikelfraktion mit einer mittleren Korngröße d₅₀ im Bereich von 500nm bis 300 µm, insbesondere von 1µm bis 200 µm und beispielsweise im Bereich von 2 bis 100µm, beispielsweise zwischen 2,5 µm bis 10µm, erwiesen.

Beispielsweise liegt in der Komponente **B** ein multimodales Gemisch von Partikel verschiedener Korngrößen vor, so dass gröbere und feinere Fraktionen sich gegenseitig ergänzen, insbesondere hinsichtlich der mechanischen Eigenschaften bei der Verarbeitung der Formulierung. So ist bekannt, dass kleinere Partikel-Fraktionen hinsichtlich der Fließfähigkeit der Formulierung für gröbere Partikel wie Kugellager wirken können.

Die PFTs der Komponente **B** können - je nach Bedarf - amorph, semikristallin, mit kristallinen Anteilen, sowie in beliebigen Mischungen der vorgenannten Modifikationen in der Formulierung vorliegen. Anteile oder alle PFTs der Komponente **B** können auch verstärkt, insbesondere Faser-verstärkt, vorliegen. Es können alle Arten nicht elektrisch leitfähiger Füllstoffe eingearbeitet sein, so können z.B. Aramidfaserverstärkte, Glasfaserverstärkte thermoplastische Partikel in der Komponente **B** enthalten sein.

Die PFTs umfassen beispielsweise polymere feste Füllstoff-Partikel aus Materialien wie Hochleistungskunststoff - bevorzugt mit relativem Temperaturindex größer 190°C und bevorzugt größer 200°C - wie z.B.

Thermoplastische Polyimide - TPI-, siehe auch Strukturformeln **I** bis **III**,
Polyetherimid - PEI-,
Polybenzimidazol -PBI-,
thermoplastisches Silikon, in Form von nach entsprechender Frost-Behandlung fest vorliegender polymerer Füllstoff-Partikel,
Polyamidimid -PAI-,
Polyetherketone wie z.B.
Polyetheretherketon -PEEK-,
Polyetherketonketon -PEKK-,
Poletherketonetherketonketon -PEKEKK-
Polyetherketon -PEK-,
Polymere Schwefelverbindungen, wie z.B.
Polysulfon -PSU-,
Polyphenylensulfid -PPS-,
Polyethersulfon -PES-,
Polyphenylensulfon -PPSU-
jeweils allein oder in beliebigen Mischungen, Blends und/oder Copolymeren im Partikel vorliegend, umfasst.

Beispielsweise umfasst die Komponente **B** PFTs aus einem thermoplastischen Polyimid - TPI-, das der Strukturformel **I** entspricht: 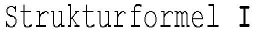 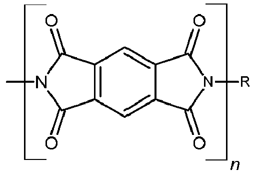 und/oder Strukturformel II 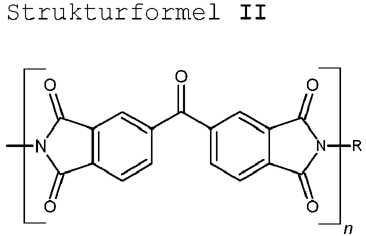 mit
- gilt für beide Strukturformeln **I** und **II** -
n = 1 bis 10 000

R ist gleich oder ungleich und steht für beliebige aliphatische und/oder aromatische organische, Kohlenwasserstoffbasierte, gegebenenfalls Heteroatom-substituierte, organische Reste mit beliebigen funktionellen Gruppen.

Daher kann R = Alkyl, Aryl, O,S-Alkyl, O,S-Aryl, N,P-Aryl, N,P-Alkyl mit beliebigen funktionellen Gruppen, wie Säuregruppen, Estergruppen, Ethergruppen etc. sein.

Nach einer anderen Ausführungsform umfasst die Komponente **B** beispielsweise PFTs aus einem TPI, das die Strukturformel **III** - zumindest als Bestandteil - umfasst:

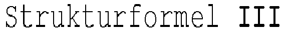

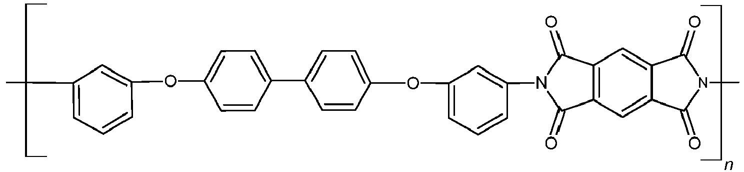

Wieder mit n im Bereich von 1 bis 10 000.

Eine, ein Element mit der Struktur **III** umfassende, thermoplastische Verbindung kann aber auch als Bestandteil beliebiger Copolymere und/oder Blends als PFT in der Komponente **B** vorliegen.

Partikel aus thermoplastischem Hochleistungskunststoff mit den oben genannten Strukturformeln **I** bis **III** können z.B. Glasübergangstemperaturen Tgs von bis zu 350°C haben.

Als PFT beispielsweise eingesetzte thermoplastische Hochleistungskunststoffe können in reiner Form aber auch in beliebigen Blends und/oder Copolymeren in PFTs der Komponente **B** vorliegen.

Die Komponente **B** umfasst z.B. verschiedene Partikelfraktionen, jeweils andere Hochleistungskunststoffe enthaltend.

PFTs der Komponente **B** liegen unter Umständen beschichtet oder unbeschichtet vor.

PFTs der Komponente **B** liegen beispielsweise Oberflächenbehandelt vor, wobei eine chemische und/oder physikalische Funktionalisierung der Oberfläche hinsichtlich besserer Anbindung an das duromere Harz eine Möglichkeit der Oberflächenbehandlung darstellt.

Vorzugsweise umfasst die Komponente **B** zumindest eine Partikelfraktion an PFTs, die faser-verstärkte Partikel hat.

Zusätzlich zur Komponente **B** kann in der Formulierung weiterer Füllstoff wie Quarzmehl, Quarzgut, Glimmer, Siloxan allein oder in beliebigen Mischungen enthalten sein.

Darüber hinaus können in der Formulierung noch die üblichen Additive für Verguss, Pulverlack oder Nasslack enthalten sein, wie Verlaufshilfsmittel, Entgaser sowie beliebige weitere, fachnotorisch bekannte Additive für elektrische Isolationssysteme.

Im Folgenden wird die Erfindung noch anhand einiger Beispiele näher erläutert.

### Beispiel 1:

Basisharz Bisphenol A: 46,5 %
Härter Dicyandiamid: 0,5 %
Beschleuniger: Toluyl-bis-1,1-dimethylharnstoff: 0,5 %
Füllstoff: Quarzmehl: 20 %
Füllstoff 2: Siloxan-Polyimid-Copolymer 10%
Polymerer Füllstoff mit hohem Temperaturindex "**PFT**" : Polyimid, Strukturformel **II** 20%
Additiv: Verlaufshilfsmittel 1%
Additiv: Entgaser 1,5

### Beispiel 2:

Basisharz Bisphenol A: 55,5 %
Härter Dicyandiamid: 1 %
Beschleuniger: Toluyl-bis-1,1-dimethylharnstoff: 1 %
PFT: Polyimid, Strukturformel **II** 40%
Additiv: Antikrater- und Verlaufshilfsmittel 1,5%
Additiv: Entgaser 1%

Durch die Zugabe der PFTs in der Komponente **B** konnte bei der Messung des Temperaturindexes eine Steigerung von 154°C der reinen DGEBA/DICY Formulierung auf 183°C der mit 30% Komponente **B** in Form von PFTs auf Basis von thermoplastischem Polyimid versetzten Formulierung gemessen werden.

Durch die vorliegend offenbarte Erfindung wird eine Isolationsformulierung für Isolationssysteme ebenso wie isolierende Beschichtungen zur Verfügung gestellt, die drastische Verbesserung gegenüber dem Stand der Technik, insbesondere den Basisharzen ohne PFTs, zeigt, weil sie gleichzeitig eine
- ausgezeichnete Beständigkeit gegenüber Umgebungseinflüssen,
- ausreichende - 3 Monate oder länger - Lagerstabilität bei Raumtemperatur,
- Verbessertes thermomechanisches Verhalten der daraus hergestellten Isolationssysteme und isolierenden Beschichtungen und
- gute Verarbeitbarkeit als Verguss, Pulverlack oder Nasslack zeigt.

Die Erfindung betrifft allgemein das Gebiet der Isolierung, insbesondere eine Formulierung für eine Hochtemperatur-Isolierung bei Betriebstemperaturen von 200°C und mehr. Die Isolierung dient als Isolation von elektrischen Leitern. So betrifft die Erfindung ein Isolationssystem für eine elektrische Maschine, insbesondere eine rotierende elektrische Maschine mit Stator, wie einen Elektromotor und/oder einen Generator mit verbesserter Temperaturbeständigkeit der polymeren Isolationssystems-Bestandteile und oder eine isolierende Beschichtung für generativ hergestellte Leiter oder Teilen davon, Stromschienen, Anschlussschienen und/oder Klemmkästen.

Durch die vorliegende Erfindung wird erstmals eine Formulierung für einen Pulverlack, für ein Pulver für ein Wirbelbett, für ein Gießharz und/oder eine Formulierung für einen Nasslack offenbart, der als Komponente **B** PFTs, also Hochleistungskunststoffe in durchgehärteter, polymerer und -auch bei Thermoplasten - fester Form umfasst, wobei sich gezeigt hat, dass PFTs die thermische Beständigkeit des resultierenden Werkstoffs beträchtlich steigern können und dabei noch verbesserte thermomechanische Eigenschaften in ein daraus hergestelltes Isolationssystem und/oder einer daraus hergestellten isolierenden Beschichtung bringen. Die Erfindung wird zur Herstellung von Isolationssystemen für elektrische rotierende Maschinen eingesetzt. Weitere Einsatzgebiete der erfindungsgemäßen Formulierung sind z.B. isolierende Beschichtung von generativ hergestellten Leitern, Stromschienen und/oder Anschlussschienen so wie die Beschichtung von Klemmkästen.

## Patentansprüche

1. Formulierung für ein Isolationssystem und/oder eine isolierende Beschichtung, als Verguss, Pulverlack und/oder Lösungsmittel-haltig als Nasslack vorliegend, zumindest eine Komponente **B** umfassend, wobei
auch eine Komponente **A**, ein unvernetzt vorliegendes, flüssiges oder festes Basisharz mit zur Härtung erforderlichem Härter und/oder Beschleuniger vorzugsweise enthalten ist und
Komponente **B** als PFT, also in Form eines bei Raumtemperatur unter Normalbedingungen festen polymeren Füllstoffes mit hohem relativen Temperaturindex, insbesondere größer 160°C, vorliegt, wobei
Komponente **A** im Bereich von 0% bis 99% Masseanteile und Komponente **B** im Bereich von 1% bis 100% Masseanteile, bezogen auf 100% der Lösungsmittelfreien Formulierung, vorliegt.

2. Formulierung nach Anspruch 1, bei der das Basisharz eine oder mehrere Verbindungen, ausgewählt aus der Gruppe Epoxidharz, Polyurethanharz, Polyisocyanatharz, Polyimidharz, Polyesterimidharz und/oder Polyesterharz, allein oder in beliebigen Mischungen, Blends und/oder Copolymeren, umfasst.

3. Formulierung nach einem der Ansprüche 1 oder 2, bei der der Härter eine Verbindung umfasst, die auf Anhydridbasis, Imidazolbasis und/oder Dicyanamidbasis, sowie beliebigen Derivaten und/oder Mischungen dieser Verbindungen, aufgebaut ist.

4. Formulierung nach einem der vorhergehenden Ansprüche, bei der die Komponente **A** einen Beschleuniger umfasst.

5. Formulierung nach einem der vorhergehenden Ansprüche, die weitere Füllstoffe wie Quarzgut, Quarzmehl und/oder Siloxan, allein oder in beliebigen Mischungen und Kombinationen, umfasst.

6. Formulierung nach einem der vorhergehenden Ansprüche, die als Nasslack in einem Lösungsmittel wie beispielsweise Aceton, Isopropanol, Ethylester, Methylethylketon, Butylacetat in beliebigen Mischungen und/oder Kombinationen vorliegt.

7. Formulierung nach einem der vorhergehenden Ansprüche, die in der Komponente **B** PFTs mit Korngrößen von 1nm bis 3 mm umfasst.

8. Formulierung nach einem der vorhergehenden Ansprüche, die in der Komponente **B** PFTs mit Korngrößen von 0,1µm bis 1000µm umfasst.

9. Formulierung nach einem der vorhergehenden Ansprüche, die in der Komponente **B** zumindest zwei verschiedene Partikelfraktionen an PFTs mit Korngrößen von 1nm bis 3 mm umfasst.

10. Formulierung nach einem der vorhergehenden Ansprüche, wobei die Komponente **B** PFTs aus Hochleistungskunststoff wie Thermoplastische Polyimide - TPI-, siehe auch Strukturformeln **I** bis **III**,
Polyetherimid - PEI-,
Polybenzimidazol -PBI-,
Polysiloxan,
Polyamidimid -PAI-,
Polyetherketone wie z.B.
Polyetheretherketon -PEEK-,
Polyetherketonketon -PEKK-,
Polyetherketonetherketonketon -PEKEKK-
Polyetherketon -PEK-,
Polymere Schwefelverbindungen, wie z.B.
Polysulfon -PSU-,
Polyphenylensulfid -PPS-,
Polyethersulfon -PES-,
Polyphenylensulfon -PPSU-.
jeweils allein oder in beliebigen Mischungen, Blends und/oder Copolymeren im Partikel vorliegend, umfasst.

11. Formulierung nach einem der vorhergehenden Ansprüche, wobei die Komponente **B** verschiedene **PFT-**Partikelfraktionen, jeweils andere Hochleistungskunststoffe enthaltend, umfasst.

12. Formulierung nach einem der vorhergehenden Ansprüche, wobei die Komponente **B** mehrere verschiedene Partikelfraktionen mit PFTs verschiedenen Grades an Kristallinität, also amorph, teilkristallin und/oder kristallin vorliegende PFTs, umfasst.

13. Formulierung nach einem der vorhergehenden Ansprüche, wobei die Komponente **B** zumindest eine faserverstärkte **PFT-**Partikelfraktion umfasst.

14. Formkörper, erhältlich durch Härtung einer Formulierung nach einem der Ansprüche 1 bis 13, wobei der Formkörper ein Isolationssystem oder Teile eines Isolationssystems und/oder eine elektrisch isolierende Beschichtung oder Teile einer elektrisch isolierenden Beschichtung bildet.

15. Verwendung einer Formulierung nach einem der Ansprüche 1 bis 13 zur Herstellung eines Isolationssystems und/oder einer isolierenden Beschichtung durch Verguss, Pulverbeschichtung, Wirbelbettbeschichtung, Nasslackierung und/oder Leiterisolierung.
